# EUROPÄISCHE PATENTSCHRIFT

(11) **EP 3 268 888 B1**
(45) Veröffentlichungstag und Bekanntmachung des Hinweises auf die Patenterteilung: **27.11.2019**
(21) Anmeldenummer: 16723315.4
(22) Anmeldetag: 09.05.2016
(51) Int. Cl.: G06F 21/10

(54) **VORRICHTUNG, SYSTEM, VERFAHREN UND COMPUTERPROGRAMMPRODUKT ZUM ANPASSEN EINER NUTZUNG EINES GERÄTS**
DEVICE, SYSTEM, METHOD AND COMPUTER PROGRAM PRODUCT FOR ADAPTING THE USE OF AN APPARATUS
DISPOSITIF, SYSTÈME, PROCÉDÉ ET PRODUIT DE ROGRAMME INFORMATIQUE D'ADAPTATION D'UNE UTILISATION D'UN APPAREIL

(30) Priorität: 27.05.2015 DE 102015209714
(43) Veröffentlichungstag der Anmeldung: 17.01.2018
(73) Patentinhaber: Siemens Mobility GmbH, 81739 München (DE)
(72) Erfinder: BROCKHAUS, Hendrik, 85579 Unterbiberg (DE); BUSSER, Jens-Uwe, 85579 Neubiberg (DE)
(86) Internationale Anmeldenummer: PCT/EP2016/060340
(87) Internationale Veröffentlichungsnummer: WO 2016/188730

(56) Entgegenhaltungen:
- DE-A1- 10 147 948
- US-A1- 2003 156 719

## Beschreibung

Die vorliegende Erfindung betrifft eine Vorrichtung zum Anpassen einer Nutzung eines Geräts. Des Weiteren betrifft die vorliegende Erfindung ein System mit einer solchen Vorrichtung sowie ein Verfahren zum Anpassen einer Nutzung eines Geräts.

In verschiedenen Bereichen ist es bei Produkten beziehungsweise Geräten üblich, Lizenzen zu verwenden, um die Nutzung beispielsweise von Software an bestimmte Geräte zu binden. Dies kann durch die Verwendung von gerätespezifischen Parametern, wie MAC-Adressen, IP-Adressen oder ID-Komponenten des Geräts erfolgen.

Eine andere Möglichkeit besteht darin, Softwarelizenzierungen zu verwenden, die eine Onlineverbindung zu einem Lizenzierungsserver des Herstellers oder im Netzwerk des Anwenders erfordern. Dies kann einmalig bei der Installation, bei jedem Programmstart oder dauerhaft während der Nutzung der Software geschehen. Des Weiteren sind Lizenzen bekannt, die die Nutzung einer Software einschränken können.

In manchen Fällen kann es jedoch wünschenswert sein, nachträglich eine Nutzung eines Geräts einzuschränken, umzuändern oder zu erweitern. Jedoch soll eine Anpassung einer Nutzung eines Geräts häufig nur durch berechtigte Nutzer möglich sein.

Offenlegungsschrift DE10147948 ist weiter Stand der Technik.

Vor diesem Hintergrund besteht eine Aufgabe der vorliegenden Erfindung darin, auf einfache Weise die Erzeugung von Zertifikaten zu beeinflussen, die an ein bestimmtes Gerät gebunden sind und deren Nutzung bestimmen können.

Demgemäß wird eine Vorrichtung zum Anpassen einer Nutzung eines Geräts gemäß der unabhängigen Ansprüche vorgeschlagen. Die Vorrichtung weist eine Verarbeitungseinheit zum Überprüfen, ob eine Lizenz für das Gerät vorliegt, und zum Erzeugen einer Zertifikatsanfrage, und eine Sende-Empfangseinheit zum Senden der Zertifikatsanfrage an einen Zertifizierungsserver und zum Empfangen eines Zertifikats von dem Zertifizierungsserver in Antwort auf die Zertifikatsanfrage auf. Die Verarbeitungseinheit ist dabei dazu eingerichtet, zu überprüfen, ob Informationen, die in dem Zertifikat enthalten sind, mit Lizenzinformationen übereinstimmen, und basierend auf dem Zertifikat eine Nutzung des Geräts anzupassen.

Durch die vorgeschlagene Vorrichtung ist es möglich, basierend auf einer bereits vorhandenen Lizenz ein Zertifikat zu erzeugen, beziehungsweise von einem Zertifizierungsserver ausstellen zu lassen. Durch die bereits vorhandene Lizenz kann das neue Zertifikat im Rahmen eines Bootstrapping von der bereits vorhandenen Lizenz beziehungsweise eine Gültigkeit der Lizenz abhängig gemacht werden.

Die Vorrichtung kann hierbei ein Gerät oder ein Teil eines Geräts sein, dem eine Lizenz zugeteilt ist. Das Gerät kann ein Produkt sein, dem eine Lizenz zugeteilt werden kann.

Der Zertifizierungsserver kann ein Server zur Zertifikatserstellung, das heißt eine Certificate Authority, sein. Der Zertifizierungsserver kann auch eine Registrierungsstelle zur Prüfung der Identität der Vorrichtung beziehungsweise des Geräts, das heißt eine Registration Authority, beinhalten oder mit dieser kommunizieren. Der Zertifizierungsserver überprüft die empfangene Zertifikatsanfrage und erstellt basierend auf den darin enthaltenen Informationen ein Zertifikat. Die Informationen der Lizenz können beispielsweise den Inhalt des zu erstellenden Zertifikats definieren.

Die jeweilige Einheit, zum Beispiel Verarbeitungseinheit oder Sende-Empfangseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Sende-Empfangseinheit kann des Weiteren eine oder mehrere Antennen aufweisen, um mit dem Zertifizierungsserver zu kommunizieren. Alternativ kann diese Kommunikation auch kabelgebunden erfolgen.

Das Zertifikat kann beispielsweise die Nutzung des Geräts erweitern, abändern oder einschränken. Auf diese Weise kann erreicht werden, dass ein Nutzer das Gerät in einem erweiterten Umfang nutzen kann, beispielsweise als Erweiterung bestimmter implementierter Merkmale beziehungsweise Funktionen. Des Weiteren kann gewünscht sein, dass der Nutzer bestimmte Merkmale beziehungsweise Funktionen des Geräts nicht freischalten kann, beispielsweise im Rahmen einer Probenutzung oder zeitlich begrenzten Nutzung. Unter anderem kann eine Verschlüsselung der Kommunikation nicht eingeschaltet werden oder eine Verschlüsselung nur mit einem kryptographisch schwachen Schlüssel erfolgen.

Eine solche Funktion kann auch beispielsweise genutzt werden, wenn das gleiche Gerät in verschiedenen Staaten verwendet werden soll, diese Staaten jedoch unterschiedliche Anforderungen an eine Verschlüsselung haben oder manche Verschlüsselungen nicht erlauben. Des Weiteren kann beispielsweise ein Diebstahlschutz erreicht werden, wenn bestimmte Nutzungsfreigaben durch das Zertifikat nicht ermöglicht werden.

Gemäß einer Ausführungsform ist die Verarbeitungseinheit dazu eingerichtet, zu überprüfen, ob die Lizenz gültig ist.

Diese Überprüfung der Lizenz kann dazu verwendet werden, dass die Vorrichtung beziehungsweise die Verarbeitungseinheit der Vorrichtung nur dann ein neues Zertifikat anfordern kann, wenn eine gültige Lizenz für das Gerät vorliegt.

Gemäß einer Ausführungsform enthält die Zertifikatsanfrage Lizenzinformationen.

In die Zertifikatsanfrage können Informationen aus der Lizenz eingefügt werden. Diese Lizenzinformationen können das Gerät oder Eigenschaften des Geräts definieren.

Gemäß einer weiteren Ausführungsform ist die Verarbeitungseinheit dazu eingerichtet, aus den Lizenzinformationen vordefinierte Informationen auszuwählen und in die Zertifikatsanfrage einzufügen.

Die Verarbeitungseinheit kann dabei verpflichtende Datenfelder aus der Lizenz in die Zertifikatsanfrage einfügen. Diese verpflichtenden Datenfelder beziehungsweise vordefinierten Informationen können beispielsweise festlegen, welchen Inhalt das neue Zertifikat haben darf. Inhalt in diesem Zusammenhang kann beispielsweise auch als Umfang der freizuschaltenden Funktionen des Geräts verstanden werden. Des Weiteren können die vordefinierten Informationen eine Identität des Geräts angeben.

Gemäß einer weiteren Ausführungsform ist die Verarbeitungseinheit dazu eingerichtet, zu überprüfen, ob der Zertifizierungsserver, von dem das Zertifikat erzeugt wurde, mit den Lizenzinformationen übereinstimmt.

Auf diese Weise kann die Verarbeitungseinheit sicherstellen, dass das empfangene Zertifikat von einem vertrauenswürdigen Zertifizierungsserver erzeugt wurde. In der Lizenz kann festgelegt sein, welcher Zertifizierungsserver Zertifikate ausstellen darf, und diese Information kann bei der Überprüfung verwendet werden.

Gemäß einer weiteren Ausführungsform ist die Verarbeitungseinheit dazu eingerichtet, eine Fehlermeldung auszugeben, falls die Informationen, die in dem Zertifikat enthalten sind, und/oder der Zertifizierungsserver nicht mit den Lizenzinformationen übereinstimmen.

Wenn die Verarbeitungseinheit feststellt, dass keine gültige Lizenz für das Gerät vorliegt, oder feststellt, dass der Zertifizierungsserver, von dem das Zertifikat empfangen wurde, oder die Angaben im Zertifikat nicht mit den Informationen in der Lizenz übereinstimmen, ist das Ergebnis des Überprüfens negativ. In diesem Fall kann die Verarbeitungseinheit den Vorgang des Erzeugens und Bereitstellens des Zertifikats abbrechen und eine Fehlermeldung ausgeben.

Alternativ kann die Verarbeitungseinheit auch ein Signal an weitere Einheiten der Vorrichtung oder des Geräts ausgeben, das diesen lediglich erlaubt, z.B. übergangsweise in einem eingeschränkten Zustand weiter zu arbeiten. Eine Freischaltung dieses eingeschränkten Zustands kann beispielsweise nach einer erneuten Kommunikation mit dem Zertifizierungsserver und Empfangen eines gültigen Zertifikats aufgehoben werden.

Gemäß einer weiteren Ausführungsform weist die Lizenz eine Signatur, eine Identität des Geräts und/oder weitere Daten auf.

Eine Lizenz kann beispielsweise ein vom Hersteller des Geräts oder von einer vom Hersteller befugten Stelle signiertes digitales Dokument sein. Dieses digitale Dokument beziehungsweise Datei kann eindeutige Bezeichnungen für das lizensierte Gerät beziehungsweise die Vorrichtung enthalten. Diese eindeutigen Bezeichnungen können beispielsweise Hersteller- und Typbezeichnungen oder Seriennummer des Geräts beziehungsweise der Vorrichtung sein.

Des Weiteren kann die Lizenz Daten wie Zertifikate, Fingerprints von Zertifikaten der zulässigen Zertifizierungsserver, oder Inhalte von Feldern, die in der Zertifizierungsanfrage oder im erstellten Zertifikat zwingend enthalten sein müssen oder nicht enthalten sein dürfen, aufweisen. Zu solchen Inhalten können beispielsweise Namen der möglichen erlaubten ausstellenden Zertifizierungsserver, ein Kundenname, das Einsatzgebiet oder Zielland, erlaubte oder frei geschaltete Funktionen des Geräts, Zugriffsrechte oder die Verwendung bestimmter Sicherheitsfunktionen, beispielsweise die Art der Verschlüsselung (z. B. Verschlüsselung mit starker Kryptographie, oder nur Authentifizierung und keine Verschlüsselung, oder die Verwendung schwacher kryptographischer Algorithmen und Schlüssel für eine exportierbare Variante), enthalten.

Gemäß einer weiteren Ausführungsform ist die Lizenz ein Schlüsselzertifikat und/oder ein Attributzertifikat.

Unter einem Schlüsselzertifikat wird ein Zertifikat verstanden, das einen Schlüssel beispielsweise zur Kommunikation mit anderen Geräten oder Servern darstellt. Das Schlüsselzertifikat bindet einen öffentlichen Schlüssel an die Identität des Geräts. Unter einem Attributzertifikat wird in diesem Zusammenhang ein Zertifikat verstanden, das Eigenschaften (Attribute) des Geräts an eine bestimmte Identität oder an andere Zertifikate bindet. Ein Attributzertifikat kann dabei beispielsweise definieren, welche Funktionen des Geräts verwendet werden können.

Gemäß einer weiteren Ausführungsform weist die Lizenz Informationen über eine Mehrzahl von Geräten auf.

Gemäß dieser Ausführungsform kann die Lizenz die Identitäten mehrerer Geräte enthalten. Damit ist die gleiche Lizenz für viele Vorrichtungen beziehungsweise Geräte verwendbar. Diese Lizenz muss beispielsweise nicht geheim gehalten werden, sondern kann mittels E-Mail, CD, USB-Stick, Download, etc. verteilt werden.

Gemäß einer weiteren Ausführungsform weist die Vorrichtung ein Nahfeldkommunikationselement auf, das die Lizenz enthält.

Unter einem Nahfeldkommunikationselement wird ein Near Field Communication (NFC) Device verstanden. Beispielsweise kann die Lizenz als NFC-Element nach einem Verpacken des Geräts beziehungsweise der Vorrichtung auf die Verpackung aufgebracht werden. Alternativ kann die Lizenz als NFC-Element auch direkt auf dem Gerät beziehungsweise der Vorrichtung angeordnet werden. Auf diese Weise kann die Herstellung und Verpackung der Geräts mit der Vorrichtung unabhängig vom Inhalt der Lizenz erfolgen und die Vorrichtung beziehungsweise das Gerät kann gelagert werden, da die Lizenz erst zum Zeitpunkt des Erzeugens beziehungsweise des Bereitstellens des Zertifikats vorliegen muss und daher später der Vorrichtung zugeordnet beziehungsweise auf dieser angebracht werden kann.

Gemäß einem weiteren Aspekt wird ein System mit einem Zertifizierungsserver zum Ausstellen eines Zertifikats, und einer wie oben beschriebenen Vorrichtung zum Anpassen einer Nutzung eines Geräts vorgeschlagen. Die Sende-Empfangseinheit der Vorrichtung ist dabei dazu eingerichtet, eine Zertifikatsanfrage an den Zertifizierungsserver zu senden und von dem Zertifizierungsserver ein Zertifikat zu empfangen.

Gemäß einer Ausführungsform ist der Zertifizierungsserver dazu eingerichtet, Informationen, die in der Zertifikatsanfrage enthalten sind, zu überprüfen.

Gemäß dieser Ausführungsform kann zusätzlich oder alternativ zur Kontrolle der Lizenz in der Vorrichtung auch eine zentrale Lizenzprüfung durch den Zertifizierungsserver oder eine Registrierungsstelle (Registration Authority), die mit dem Zertifizierungsserver kombiniert ist oder mit diesem kommuniziert, durchgeführt werden. Dies ermöglicht, Manipulationen an der Vorrichtung beziehungsweise dem Gerät zu erkennen, da die Lizenz durch eine zentrale Stelle überprüft wird.

Gemäß einem weiteren Aspekt wird ein Verfahren zum Anpassen der Nutzung eines Geräts vorgeschlagen. Das Verfahren weist die folgenden Schritte auf: Überprüfen, ob eine Lizenz für das Gerät vorliegt, Erzeugen einer Zertifikatsanfrage, Senden der Zertifikatsanfrage an einen Zertifizierungsserver, Empfangen eines Zertifikats von dem Zertifizierungsserver in Antwort auf die Zertifikatsanfrage, Überprüfen, ob Informationen, die in dem Zertifikat enthalten sind, mit den Lizenzinformationen übereinstimmen, und Anpassen einer Nutzung des Geräts basierend auf dem Zertifikat.

Die für die vorgeschlagene Vorrichtung beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Systems mit einer Vorrichtung zum Anpassen einer Nutzung eines Geräts; und
- Fig. 2: zeigt ein schematisches Ablaufdiagramm eines Verfahrens zum Anpassen einer Nutzung eines Geräts.

In den Figuren sind gleiche oder funktionsgleiche Elemente mit denselben Bezugszeichen versehen worden, sofern nichts anderes angegeben ist.

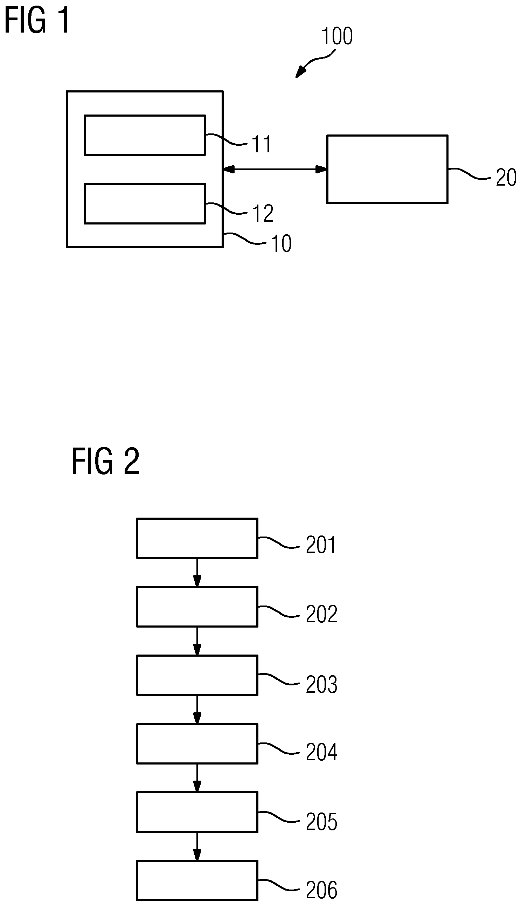

Fig. 1 zeigt ein System 100 mit einer Vorrichtung 10 zum Anpassen einer Nutzung eines Geräts.

Die Vorrichtung 10 weist eine Verarbeitungseinheit 11 und eine Sende-Empfangseinheit 12 auf. Die Vorrichtung 10 kann über die Sende-Empfangseinheit 12 mit einem Zertifizierungsserver 20 kommunizieren. Die Vorrichtung 10 kann ein Gerät oder Teil eines Geräts (nicht gezeigt) sein.

Hierzu überprüft die Verarbeitungseinheit 11 zunächst, ob eine gültige Lizenz für das Gerät vorliegt. Wenn dies der Fall ist, erzeugt die Verarbeitungseinheit 11 eine Zertifikatsanfrage, wobei die Zertifikatsanfrage Lizenzinformationen enthalten kann. Beispielsweise kann die Zertifikatsanfrage verpflichtende Informationen aus der Lizenz enthalten.

Die Sende-Empfangseinheit 12 sendet anschließend die Zertifikatsanfrage an den Zertifizierungsserver 20 und empfängt von diesem ein Zertifikat.

Die Verarbeitungseinheit 11 kann nun überprüfen, ob Informationen, die in dem Zertifikat enthalten sind, mit den Informationen der Lizenz übereinstimmen, und das Zertifikat zur weiteren Verwendung bereitstellen. Beispielsweise kann das Zertifikat dazu verwendet werden, Funktionen des Geräts freizuschalten, d.h. die Nutzung des Geräts anzupassen.

Fig. 2 zeigt ein Verfahren zum Anpassen einer Nutzung eines Geräts. Das Verfahren weist die Schritte 201 bis 206 auf.

In Schritt 201 wird überprüft, ob eine Lizenz für das Gerät vorliegt.

In Schritt 202 wird eine Zertifikatsanfrage erzeugt, wobei die Zertifikatsanfrage Lizenzinformationen enthalten kann.

In Schritt 203 wird die Zertifikatsanfrage an einen Zertifizierungsserver 20 gesendet.

In Schritt 204 wird ein Zertifikat von dem Zertifizierungsserver 20 in Antwort auf die Zertifikatsanfrage empfangen.

In Schritt 205 wird überprüft, ob Informationen, die in dem Zertifikat enthalten sind, mit den Informationen der Lizenz übereinstimmen.

In Schritt 206 wird schließlich eine Nutzung des Geräts basierend auf dem Zertifikat angepasst.

Obwohl die vorliegende Erfindung anhand von Ausführungsbeispielen beschrieben wurde, ist sie vielfältig modifizierbar.

## Patentansprüche

1. Vorrichtung (10) zum Anpassen einer Nutzung eines Geräts, mit:
einer Verarbeitungseinheit (11) zum Überprüfen, ob eine Lizenz für das Gerät vorliegt, und, wenn dies der Fall ist, zum Erzeugen einer Zertifikatsanfrage, und
einer Sende-Empfangseinheit (12) zum Senden der Zertifikatsanfrage an einen Zertifizierungsserver (20) und zum Empfangen eines Zertifikats von dem Zertifizierungsserver (20) in Antwort auf die Zertifikatsanfrage,
wobei die Verarbeitungseinheit (11) dazu eingerichtet ist, zu überprüfen, ob Informationen, die in dem Zertifikat enthalten sind, mit Lizenzinformationen übereinstimmen, und basierend auf dem Zertifikat eine Nutzung des Geräts anzupassen.

2. Vorrichtung nach Anspruch 1,
**dadurch gekennzeichnet,**
**dass** die Verarbeitungseinheit (11) dazu eingerichtet ist, zu überprüfen, ob die Lizenz gültig ist.

3. Vorrichtung nach Anspruch 1 oder 2,
**dadurch gekennzeichnet,**
**dass** die Zertifikatsanfrage Lizenzinformationen enthält.

4. Vorrichtung nach einem der Ansprüche 1 - 3,
**dadurch gekennzeichnet,**
**dass** die Verarbeitungseinheit (11) dazu eingerichtet ist, aus den Lizenzinformationen vordefinierte Informationen auszuwählen und in die Zertifikatsanfrage einzufügen.

5. Vorrichtung nach einem der Ansprüche 1 - 4,
**dadurch gekennzeichnet,**
**dass** die Verarbeitungseinheit (11) dazu eingerichtet ist, zu überprüfen, ob der Zertifizierungsserver (20), von dem das Zertifikat empfangen wurde, mit den Lizenzinformationen übereinstimmt.

6. Vorrichtung nach einem der Ansprüche 1 - 5,
**dadurch gekennzeichnet,**
**dass** die Verarbeitungseinheit (11) dazu eingerichtet ist, eine Fehlermeldung auszugeben, falls die Informationen, die in dem Zertifikat enthalten sind, und/oder der Zertifizierungsserver nicht mit den Lizenzinformationen übereinstimmen.

7. Vorrichtung nach einem der Ansprüche 1 - 6,
**dadurch gekennzeichnet,**
**dass** die Lizenz eine Signatur, eine Identität des Geräts und/oder weitere Daten aufweist.

8. Vorrichtung nach einem der Ansprüche 1 - 7,
**dadurch gekennzeichnet,**
**dass** die Lizenz ein Schlüsselzertifikat und/oder ein Attributzertifikat ist.

9. Vorrichtung nach einem der Ansprüche 1 - 8,
**dadurch gekennzeichnet,**
**dass** die Lizenz Informationen über eine Mehrzahl von Geräten aufweist.

10. Vorrichtung nach einem der Ansprüche 1 - 9,
**dadurch gekennzeichnet,**
**dass** die Vorrichtung (10) ein Nahfeldkommunikationselement aufweist, das die Lizenz enthält.

11. System (100), mit:
einem Zertifizierungsserver (20) zum Ausstellen eines Zertifikats, und
einer Vorrichtung (10) zum Anpassen einer Nutzung eines Geräts nach einem der Ansprüche 1 - 10, wobei die Sende-Empfangseinheit (12) der Vorrichtung (10) dazu eingerichtet ist, eine Zertifikatsanfrage an den Zertifizierungsserver (20) zu senden und von dem Zertifizierungsserver (20) ein Zertifikat zu empfangen.

12. System nach Anspruch 11,
**dadurch gekennzeichnet,**
**dass** der Zertifizierungsserver (20) dazu eingerichtet ist, Informationen, die in der Zertifikatsanfrage enthalten sind, zu überprüfen.

13. Verfahren zum Anpassen einer Nutzung eines Geräts, mit:
Überprüfen (201), ob eine Lizenz für das Gerät vorliegt,
wenn dies der Fall ist, Erzeugen (202) einer Zertifikatsanfrage,
Senden (203) der Zertifikatsanfrage an einen Zertifizierungsserver (20),
Empfangen (204) eines Zertifikats von dem Zertifizierungsserver (20) in Antwort auf die Zertifikatsanfrage,
Überprüfen (205), ob Informationen, die in dem Zertifikat enthalten sind, mit den Lizenzinformationen übereinstimmen, und
Anpassen (206) einer Nutzung des Geräts basierend auf dem Zertifikat.

14. Computerprogrammprodukt, welches auf einer programmgesteuerten Einrichtung die Durchführung des Verfahrens nach Anspruch 13 veranlasst.

## Claims

1. Device (10) for adapting the use of an apparatus, comprising:
a processing unit (11) to verify whether there is a license for the apparatus, and, if this is the case to generate a certificate request, and
a transmitting/receiving unit (12) to send the certificate request to a certification server (20) and to receive a certificate from the certification server (20) in response to the certificate request,
wherein the processing unit (11) is set up to verify if information contained within the certificate corresponds to license information and to adapt the use of the apparatus based on the certificate.

2. Device according to Claim 1,
**characterized in**
**that** the processing unit (11) is set up to check if the license is valid.

3. Device according to Claim 1 or 2,
**characterized in**
**that** the certificate request contains license information.

4. Device according to one of the Claims 1 - 3,
**characterized in**
**that** the processing unit (11) is set up to select predefined information from the license information and add it to the certificate request.

5. Device according to one of the Claims 1 - 4,
**characterized in**
**that** the processing unit (11) is set up to check if the certification server (20), from which the certificate was received, corresponds to the license information.

6. Device according to one of the Claims 1 - 5,
**characterized in**
**that** the processing unit (11) is set up to output an error message if the information contained within the certificate and/or the certification server does not correspond to the license information.

7. Device according to one of the Claims 1 - 6,
**characterized in**
**that** the license has a signature, an identity of the apparatus and/or other data.

8. Device according to one of the Claims 1 - 7,
**characterized in**
**that** the license is a code-key certificate and/or an authorization certificate.

9. Device according to one of the Claims 1 - 8,
**characterized in**
**that** the license has information on a plurality of apparatuses.

10. Device according to one of the Claims 1 - 9,
**characterized in**
**that** the device (10) has a near field communication element that contains the license.

11. System (100), comprising:
a certification server (20) to create a certificate, and
a device (10) for adapting the use of an apparatus according to one of the Claims 1 - 10, wherein the transmitting/receiving unit (12) of the device (10) is set up to send a certificate request to the certification server (20) and receive a certificate from the certification server (20).

12. System according to Claim 11,
**characterized in**
**that** the certification server (20) is set up to verify information that is contained within the certificate request.

13. Method for adapting the use of an apparatus, comprising:
the verification (201) of whether a license is available for the apparatus,
if this is the case the generation (202) of a certificate request,
the sending (203) of the certificate request to a certification server (20),
the reception (204) of a certificate from the certification server (20) in response to the certificate request,
the verification (205) of whether the information contained within the certificate corresponds to the license information, and
the adaptation (206) of the use of the apparatus based on the certificate.

14. Computer-program product, which initiates the method according to Claim 13 to be carried out on a program-controlled device.

## Revendications

1. Dispositif (10) d'adaptation d'une utilisation d'un appareil comprenant :
une unité de traitement (11) pour vérifier si une licence existe pour l'appareil et lorsque c'est le cas, pour produire une requête de certificat, et
une unité d'envoi-réception (12) pour envoyer la requête de certificat à un serveur de certification (20) et pour recevoir un certificat du serveur de certification (20) en réponse à la requête de certificat,
dans lequel l'unité de traitement (11) est conçue pour vérifier si des informations qui sont contenues dans le certificat concordent avec des informations de licence, et pour adapter une utilisation de l'appareil en se basant sur le certificat.

2. Dispositif selon la revendication 1, **caractérisé en ce que** l'unité de traitement (11) est conçue pour vérifier si la licence est valable.

3. Dispositif selon la revendication 1 ou 2, **caractérisé en ce que** la requête de certificat contient des informations de licence.

4. Dispositif selon l'une des revendications 1 - 3, **caractérisé en ce que** l'unité de traitement (11) est conçue pour sélectionner et insérer dans la requête de certificat des informations prédéfinies à partir des informations de licence.

5. Dispositif selon l'une des revendications 1 - 4, **caractérisé en ce que** l'unité de traitement (11) est conçue pour vérifier si le serveur de certification (20) duquel le certificat a été reçu, concorde avec les informations de licence.

6. Dispositif selon l'une des revendications 1 - 5, **caractérisé en ce que** l'unité de traitement (11) est conçue pour émettre un message d'erreur si les informations qui sont contenues dans le certificat, et/ou le serveur de certification ne concorde(nt) pas avec les informations de licence.

7. Dispositif selon l'une des revendications 1 - 6, **caractérisé en ce que** la licence présente une signature, une identité de l'appareil et/ou d'autres données.

8. Dispositif selon l'une des revendications 1 - 7, **caractérisé en ce que** la licence est un certificat de code et/ou un certificat d'attribut.

9. Dispositif selon l'une des revendications 1 - 8, **caractérisé en ce que** la licence présente des informations sur une pluralité d'appareils.

10. Dispositif selon l'une des revendications 1 - 9, **caractérisé en ce que** le dispositif (10) présente un élément de communication en champ proche qui contient la licence.

11. Système (100) comprenant :
un serveur de certification (20) pour établir un certificat, et
un dispositif (10) pour adapter une utilisation d'un appareil selon l'une des revendications 1 - 10, dans lequel l'unité d'envoi-réception (12) du dispositif (10) est conçue pour envoyer une requête de certificat au serveur de certification (20) et recevoir un certificat du serveur de certification (20).

12. Système selon la revendication 11, **caractérisé en ce que** le serveur de certification (20) est conçu pour vérifier des informations qui sont contenues dans la requête de certificat.

13. Procédé d'adaptation d'une utilisation d'un appareil comprenant :
la vérification (201) si une licence existe pour l'appareil,
lorsque c'est le cas, la production (202) d'une requête de certificat,
l'envoi (203) de la requête de certificat à un serveur de certification (20),
la réception (204) d'un certificat du serveur de certification (20) en réponse à la requête de certificat,
la vérification (205) si des informations qui sont contenues dans le certificat concordent avec les informations de licence, et l'adaptation (206) d'une utilisation de l'appareil en se basant sur le certificat.

14. Produit de programme informatique qui déclenche l'exécution du procédé selon la revendication 13 sur un dispositif commandé par un programme.
